# EUROPÄISCHE PATENTSCHRIFT

(11) **EP 0 896 868 B1**
(45) Veröffentlichungstag und Bekanntmachung des Hinweises auf die Patenterteilung: **05.12.2001**
(21) Anmeldenummer: 98112195.7
(22) Anmeldetag: 01.07.1998
(51) Int. Cl.: B29C 35/02, B29C 70/00

(54) **Verfahren und Vorrichtung zur Verformung einer aushärtbaren Matte in ein Raumformgebilde**
Method and apparatus for deforming a curable mat into a three-dimensional structure
Procédé et dispositif pour le déformage d'un mat durcissable dans un corps à forme tridimensionelle

(30) Priorität: 14.08.1997 DE 19735321
(43) Veröffentlichungstag der Anmeldung: 17.02.1999
(73) Patentinhaber: Bayerische Motoren Werke Aktiengesellschaft, 80788 München (DE)
(72) Erfinder: Fuchs, Gerald, 85229 Markt Indersdorf (DE)

(56) Entgegenhaltungen:
- EP-A- 0 620 091
- US-A- 3 487 133

## Beschreibung

Die Erfindung bezieht sich nach den Ansprüchen 1 mit 3 auf ein Verfahren zur Verformung einer Matte in ein Raumformgebilde und gemäß den Ansprüchen 4 mit 7 auf eine Vorrichtung zur Durchführung des Verfahrens, wobei gemäß dem Oberbegriff des Patentanspruches 1 von der US-A-3 487 133 ausgegangen wird.

Es ist bekannt, mit einem wärmeaushärtbaren Harz getränkter Matten oder Laminate mittels eines in der Herstellung aufwendigen Modells in die jeweils gewünschte Raumform zu bringen. Diese formgebundene Herstellung ist insbesondere für eine in einer Vorentwicklung benötigte Kleinserie enorm zeitund sicherheitsaufwendig, und außerdem ist die erreichbare Qualität wesentlich vom Geschick der jeweiligen Arbeitskraft abhängig.

Dem gegenüber ist es aus der US-A-3 487 133 bekannt, in einer aus einem thermoplastischen Material gebildeten, steifen Matte durch schrittweises lokales Erwärmen eine zusammenhängende partielle Raumformkontur auszubilden, die mit dem Erkalten steif wird.

Der Erfindung liegt die Aufgabe zugrunde, ein Verfahren aufzuzeigen, gemäß dem eine mit einem wärmeaushärtbaren Hart getränkte Matte in einem automatisch abiaufenden Vorgang in ein formsteifes Raumformgebilde ausgeformt wird.

Diese Aufgabe wird mit dem Patentanspruch 1 gelöst.

Der Vorteil der Erfindung ist, daß eine derartige Matte oder ein derartiges Laminat mittels eines rechnergesteuerten Werkzeuges in die jeweilige Raumform frei ausformbar ist durch eine punkt- bzw. bereichsweise Vorgehensweise des rechnergesteuerten Werkzeuges. Ein derartiger anhand von im Rechner gespeicherten Zeichnungsdaten gesteuerter Freiausformungs-Vorgang läuft vorteilhafterweise automatisch mit Überwachung ab, wobei zur vollständigen Ausformung eines Raumformgebildes aus einer wärmeaushärtbaren harzgetränkten Matte je nach Größe zumindest in einer Arbeitsschicht hergestellt werden kann. Gegenüber der zeitaufwendigen Herstellung eines entsprechenden Modells ist mit der erfindungsgemäßen Freiausformung eines Raumformgebildes durch punkt- bzw. kleinbereichsweises Ausformen und Härten eine erheblich verkürzte Herstellzeit erzielt

Zur Vorbereitung einer erfindungsgemäßen Freiausformung wird die Matte entsprechend einer Raumformausbildung mit einem länglichen, insbesondere endseitig offenen Profil oder einem wannenartigen bis rotationssymetrischen Profil in einem profilbezogenen lokalen Bereich vorab derart ausgehärtet, daß im jeweiligen Bereich die Einrichtung zur intermittierenden, abschnittsweisen Verlagerung der Matte aus der Vorratssteliung in Angriff gebracht werden kann, insbesondere mittels eines sowie.

Zur erfindungsgemäßen Freiausformung werden zwei gesonderte Werkzeuge mit im wesentlichen diametral angeordneten elektrodenartigen Druckstempeln mit korrespondierenden Druckflächen verwendet und der erste Druckstempel profilinnenseitig der Matte einem intermittierend erzeugten Abschnitt zur bereichsweisen Raurnformausbildung gesteuert zugestellt und der zweite Druckstempel profilaußenseitig am jeweiligen Matten-Abschnitt dem ersten Druckstempel vorbestimmt beabstandet angenähert wird, wobei die zwischen den Druckstempeln beaufschlagte Matte durch eine über die entsprechend ausgebildeten Druckflächen der Druckstempeln materialabhängig eingebrachte Wärme, wie z.B. elektrische Erwärmung, Infrarot, UV-Strahlung, Plasma, Heißluft oder Lichtausgehärtet wird.

Zur Durchführung des erfindungsgemäßen Freiausformens sind in weiteren Ansprüchen vorteilhafte Ausgestaltungen einer Vorrichtung beschrieben.

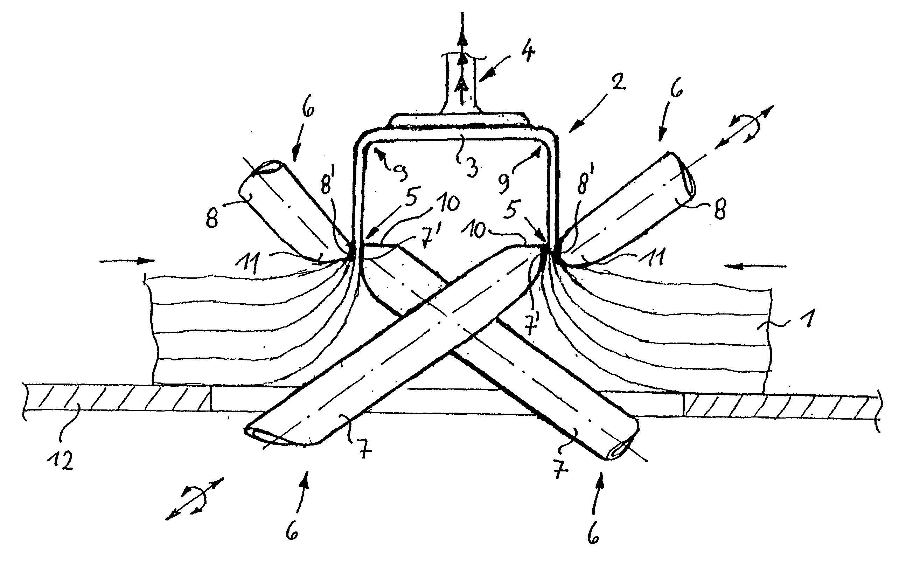

Die Erfindung ist anhand einer in der Zeichnung schematisch dargestellten Profilausbiidung aus einer Matte beschrieben.

Das erfindungsgemäße Veffahren zur Freiausformung einer mit einem wärmeaushärtbaren Harz getränkten Matte in ein Raumformgebilde ist beispielsweise anwendbar für ein Polyester-Vlies mit eingelegtem unidirektionalen, locker vernadelten Kohlefaser-Gelege oder einem unidirektionalen Glas- oder Kohlefaser-Gelege mit thermoplastischer Schlichte oder für ein mit UV-hartendem Harz vorgetränktes, mehrlagiges Glasfasergewebe in Köperbindung mit Schutzfolie oder schließlich eine mit UV-härtendem Harz vorgetränkte Glas-Rovingmatte mit Schutzfolie.

Zur Freiausformung einer auf einer beispielsweise horizontalen Vorrats-Einrichtung 12 aufliegenden Matte 1 wird diese Matte 1, 2 ensprechend dem aufgezeigten U-förmigen Profil 2, das beispielsweise ein Querschnitt eines U-Profils oder aber als Querschnitt eines rotationssymetrischen, topfartigen Raumgebildes sein kann, in einem profilbezogenen lokalen Bereich 3 vorab derart ausgehärtet, daß in diesem Bereich 3 eine vorzugsweise als Saugheber ausgebildete Einrichtung 4 die Matte 1 intermittierend bzw. absatzweise aus einer Vorratsstellung auf der Vorrats-Einrichtung 12 abschnittsweise derart verlagert bzw. angehoben wird, daß die Matte 1 in entsprechend dem absatzweisen Anheben schwerkraftgebildeten Abschnitten 5 mittels eines Werkzeuges 6 gesteuert bereichsweise konturgeformt und durch lokale Wärmezufuhr ausgehärtet wird derart, daß die entsprechend der Raumformkontur - Profil 2 - nacheinander ausgeformten Mattenabschnitte 5 jeweils in sich und miteinander durch eng benachbart bis überlappend angeordnete Aushärtestellen formsteif werden.

Zur punktweisen bzw. kleinbereichsweisen Ausfarmung und Aushärtung der Matte 1 in dem Freiformverfahren werden zwei gesonderte, nicht näher dargestellte Werkzeuge 6 mit im wesentlichen diametral angeordneten elektrodenartigen Druckstempeln 7 und 8 mit korrespondierenden Druckflächen 7' und 8' verwendet und der erste Druckstempel 7 einem intermittierend erzeugten Abschnitt 5 profilinnenseitig der Matte 1 zur bereichsweisen Raumformausbildung gesteuert zugestellt und der zweite Druckstempel 8 profilaußenseitig am jeweiligen Mattenabschnitt 5 dem ersten Druckstempel 7 vorbestimmt beabstandet angenähert, wobei die zwischen den Druckstempeln 7 und 8 beaufschlagte Matte 1 durch eine über die entsprechend ausgebildeten Druckflächen 7', 8' der Druckstempeln 7, 8 materialabhängig eingeführte Wärme ausgehärtet wird. Mit auf die jeweilige Wärmezufuhr abgestellt ausgebildeten Druckflächen 7' und 8' kann die zur Aushärtung erforderliche Wärme entweder durch elektrische Energie oder durch Infrarot oder durch UV-Strahlung, durch Plasma oder Heißluft oder durch Licht zugeführt werden, wobei die Druckflächen 7' und 8' entsprechend dem jeweiligen Wärmeeintrag gut wärmeleitend und/oder mit Durchbrechungen ausgebildet sind oder gegebenenfalls aus lichtdurchlässigem Material gestaltet sind.

Die gruppenweise zusammenwirkenden Werkzeuge 6 weisen zur Ausformung einer Raumform mit einer Winkel-bzw. Stufenkontur 9 zwei zueinander axial versetzt diametral angeordnete Druckstempeln 7 und 8 auf, die relativ zu einem zunächst gewichtsbedingt hängenden, intermittierend erzeugten Abschnitt 5 schräg gerichtet sind, wobei der innenseitig der Winkel- bzw. Stufenkontur 9 formgebend wirksame erste Druckstempel 7 eine die Stufenkontur untergreifende Abschrägung 10 aufweist, an die sich etwa rechtwinkelig eine gegenüber dem Querschnitt des Druckstempels 7 reduzierte Druckfläche 7' anschließt, der am zweiten Druckstempel 8 eine korrespondierende Druckfläche 8' gegenüberliegend in dem ansonsten verrundeten Stempelkopf 11 zugeordnet ist.

Die für eine horizontale Ausgangslage bzw. Vorratsstellung der Matte 1 vorgesehene Vorrats-Einrichtung 12 weist im Gebiet des vorab ausgehärteten Bereiches 3 der Matte 1 eine solche Durchbrechung auf, daß die Werkzeuge 6 mit den formgebend wirksamen Druckstempeln 7 an jeden durch intermittierendes Anheben erzeugten Mattenabschnitt 5 zu dessen Freiausformung herangeführt werden können. Die in jedem Mattenabschnitt 5 Punkt für Punkt bzw. kleinbereichsweise gesteuert freiformend wirksamen Druckstempeln 7 und 8 einer Werkzeuggruppe setzen ausgehartetete Punkte dicht an dicht, so daß beispielsweise bei einem topfartigen Profil 2 nach einer vollen Umrundung der jeweilige Mattenabschnitt 5 in sich formsteif ist und der nächste daran durch Anheben anschließende und in der gleichen Weise behandelte Mattenabschnitt 5 mit dem vorangegangenen Mattenabschnitt 5 eine formsteife Verbindung dadurch erreicht, daß auch die Punktreihen jedes Mattenabschnittes 5 eng benachbart bis überlappend angeordnet sind.

Diese punktweise Freiausformung einer schließlich in sich steilen Raumform aus einer zunächst flexiblen Matte ist besonders vorteilhaft dadurch erreicht, daß jedes Werkzeug 6 am freien Ende eines Armes eines rechnergesteuerten Industrieroboters angeordnet ist. Hierbei können zur Ausformung unterschiedlicher Profile oder verschiedener Profilbereiche einer Matte 1 mehrere Gruppen von Industrierobotern zusammenarbeiten, wobei diese entsprechend dem zu erzielenden Raumfonngebiide mit einer horizontal oder vertikal oder einer sonstigen räumiichen Lage angeorden Vorrats-Einrichtung 12 zusammenwirken.

Wie im übrigen aus der einzigen Figur ersichtlich, sind zur Freiausformung der Schenke eines U-Profils 2 zwei Gruppen von Werkzeugen 6 vorgesehen, die von rechnergesteuerten Industrierobotern bedient werden.

Schließlich ist jede Vorrats-Einrichtung 12 für eine ein- oder mehrlagig vorgesehene Matte 1 derart ausgebildet, daß ein der intermittierenden Verlagerung der Matte 1 zur korrekten Raumausformung entsprechender Materialnachschub unter Vorspannung sichergestellt ist. Dies kann beispielsweise in einer Vorrats-Einrichtung 12 mittels auf die jeweilige Matte 1 unter Federvorspannung einwirkenden Rollen erzielt sein.

## Patentansprüche

1. Verfahren zur Verformung einer Matte in ein Raumfomigebitde,
wobei
- die Matte (1) zur Raumformausbildung (Profil 2) mittels einer vorbestimmt lokal angreifenden Einrichtung (4) intermittierend bzw. absatzweise aus einer Vorratsstellung abschnittsweise derart verlagert wird, daß
- die Matte (1) in entsprechend dem absatzweisen Verlagern schwerkraftgebildeten Abschnitten (5) mittels eines Werkzeuges (6) gesteuert bereichsweise konturgeformt und durch lokale Wärmezufuhr ausgehärtet wird derart, daß
- die entsprechend der Raumformkontur nacheinander ausgeformten Mattenabschnitte (5) jeweils in sich und miteinander durch eng benachbart bis überlappend angeordnete Aushärtestellen formsteif werden,
**dadurch gekennzeichnet,**
- **daß** eine mit einem wärme aushärt barem Harz getränkle Matte(1) verwendetwird, wobei
- zwei gesonderte Werkzeuge (6) mit im wesentlichen diametral angeordneten elektrodenartigen Druckstempeln (7, 8) mit korrespondierenden Druckflächen (7', 8') verwendet werden, und
- der erste Druckstempel (7) einem intermittierend erzeugten Abschnitt (5) profilinnenseitig der Matte (1) zur bereichsweisen RaumformAusbildung gesteuert zugestellt und
- der zweite Druckstempel (8) profilaußenseitig am jeweiligen Mattenabschnitt (5) dem ersten Druckstempel (7) vorbestimmt beabstandet angenähert wird, wobei
- die zwischen den Druckstempeln (7, 8) beaufschlagte Matte (1) durch eine über die entsprechend ausgebildeten Druckflächen (7', 8') der Druckstempeln (7, 8) materialabhängig eingebrachte Wärme, z.B. elektrische Erwärmung. Infrarot, UV-Strahlung, Plasma, Heißluft, Licht , ausgehärtet wird.

2. Verfahren nach Anspruch 1, **dadurch gekennzeichnet,**
- **daß** die Matte (1) entsprechend einer Raumformausbildung mit einem länglichen, insbesondere endseitig offenen Profil (2) oder einem wannenartigen bis rotationssymetrischen Profil (2) in einem profilbezogenen lokalen Bereich (3) vorab derart ausgehärtet wird,
- **daß** im jeweiligen Bereich (3) die Einrichtung (4) zur intermittierenden, abschnittsweisen Verlagerung der Matte (1) aus der Vorratsstellung in Angriff gebracht werden kann.

3. Verfahren nach Anspruch 2, **dadurch gekennzeichnet, daß** zur intermittierenden Verlagerung der Matte (1) ein Saugheber als Einrichtung (4) verwendet wird.

4. Vorrichtung zur Durchführung des Verfahrens nach den Ansprüchen 1 bis 3, **dadurch gekennzeichnet,**
- **daß** die Werkzeuge (6) zur Ausformung einer Raumform (Profil 2) mit einer Winkel- bzw. Stufenkontur (9) zwei zueinander axial versetzt diametral angeordnete Druckstempeln (7, 8) aufweisen, die
- relativ zu einem zunächst gewichtsbedingt hängenden, intermittierend erzeugten Mattenabschnitt (5) schräg gerichtet sind, wobei
- der innenseitig der Winkel- bzw. Stufenkontur (9) formgebend wirksame erste Druckstempel (7) eine die Stufenkontur untergreifende Abschrägung (10) aufweist, an die sich
- etwa rechtwinkelig eine gegenüber dem Querschnitt des Druckstempels (7) reduzierte Druckfläche (7') anschließt, der
- am zweiten Druckstempel (8) eine korrespondierende Druckfläche (8') gegenüberliegend in dem ansonsten verrundeten Stempelkopf (11) zugeordnet ist

5. Vorrichtung nach Anspruch 4, **dadurch gekennzeichnet, daß** jedes Werkzeug (6) am freien Ende eines Armes eines rechnergesteuerten Industrieroboters angeordnet ist.

6. Vorrichtung nach den Ansprüchen 4 bis 5, **dadurch gekennzeichnet,**
- **daß** eine derartige Vorrats-Einrichtung (12) für eine ein- oder mehrlagig vorgesehene Matte (1) gewählt ist, mit der
- ein der intermittierenden Verlagerung der Matte (1) zur Raumausformung entsprechender Materialnachschub unter Vorspannung sichergestellt ist

7. Vorrichtung nach den Ansprüchen 4 bis 6, **dadurch gekennzeichnet, daß** der Vorrats-Einrichtung mehrere Gruppen von zusammenarbeitenden industrierobotern zur Ausformung unterschiedlicher Profile (2) oder verschiedener Profilbereiche (9) einer Matte (1) zugeordnet sind.

## Claims

1. A method of giving a three-dimensional structure to a mat
- wherein in order to form the three-dimensional shape (profile 2), the mat (1) is intermittently or stepwise moved by a device (4) engaging locally in predetermined manner, in stages from a standby position, such that
- the mat (1) is contoured in sectors under control by a tool (6) corresponding to the stepwise movement of portions (5) formed by gravity, and is hardened by a local heat supply, such that
- the mat portions (5) successively shaped in accordance with the three-dimensional contour are each made dimensionally stable in themselves and with one another via closely joining or overlapping hardened places,
**characterised in that**
- a mat (1) impregnated with a thermosetting resin is used, wherein
- two separate tools (6) comprising substantially diametrally disposed electrode-like pressure pistons (7, 8) with corresponding pressure surfaces (7', 8') are used and
- the first pressure piston (7) is associated in controlled manner with an intermittently generated portion (5) on the inside of the mat (1) profile for three-dimensional shaping sector by sector and
- the second pressure piston (8) on the outside of the profile of the respective mat portion (5) is brought to a predetermined distance from the first pressure piston (7), wherein
- the mat (1) gripped between the pressure pistons (7,8) is hardened by heat supplied in dependence on the material via the suitably shaped pressure surfaces (7', 8') of the pressure pistons (7, 8), e.g. by electric, infrared, UV or plasma heating or by hot air or light.

2. A method according to claim 1, **characterised in that**
- the mat (1), corresponding to three-dimensional shaping by means of an elongate profile (2), especially open at the end, or a trough-like or axially symmetrical profile (2), is hardened beforehand in a local sector (3) depending on the profile, such that
- in the respective sector (3) the device (4) for intermittent stepwise moving of the mat (1) can be brought out of the standby position into engagement.

3. A method according to claim 2, **characterised in that** a device (4) in the form of a siphon or pipette is used for intermittently moving the mat (1).

4. A device for working the method according to claims 1 to 3,
**characterised in that**
- the tools (6) for forming a three-dimensional shape (profile 2) having an angular or stepped contour (9) comprise two diametrally disposed pressure pistons (7, 8) axially offset from one another, and
- directed at an angle to an intermittently generated mat portion (5) initially cohering through gravity, wherein
- the first pressure piston (7), which shapes the inside of the angular or stepped contour (9), has a bevel (10) extending under the stepped contour,
- adjoining and approximately perpendicular to a pressure surface (7') reduced compared with the cross-section of the pressure piston (7), and
- associated with a corresponding pressure surface (8') on the second pressure piston (8) oppositely disposed in the otherwise rounded piston head (11).

5. A device according to claim 4, **characterised in that** each tool (6) is disposed at the free end of an arm of a computer-controlled industrial robot.

6. A device according to claims 4 or 5, **characterised in that**
- a standby or storage device (12) f
- or a single-layer or multi-layer mat (1) is chosen such that
- a supply of material under prestress corresponding to the threedimensional shaping is reliably provided for intermittently moving the mat (1).

7. A device according to any of claims 4 to 6, **characterised in that** the storage or standby device is associated with a number of groups of cooperating industrial robots for shaping different profiles (2) or different profile sectors (9) of a mat (1).

## Revendications

1. Procédé de déformage d'une nappe (mat) en une structure tridimensionnelle selon lequel :
on déplace la nappe (1) pour lui donner une forme tridimensionnelle (profil 2) à l'aide d'une installation (4) attaquant localement de manière prédéfinie, de façon intermittente ou par étape, en la déplaçant par segment à partir d'une position d'alimentation,
on donne à la nappe (1), suivant le déplacement par segment, des sections (5) formées par la gravité, en commandant à l'aide d'un outil (6) pour former un contour par zone et on durcit par apport local de chaleur de façon que : les segments de nappe (5) déformés successivement suivant la forme dans l'espace deviennent rigides chaque fois en soi et
réciproquement par des points durcis, étroitement voisins, allant jusqu'à se chevaucher,
**caractérisé en ce qu'**
on utilise une nappe (1) imprégnée avec une résine thermodurcissable, on utilise deux outils particuliers (6) avec des poinçons de pression (7, 8) en forme d'électrodes, essentiellement diamétralement positionnés, avec des surfaces de pression (7', 8') correspondantes et
on rapproche de manière commandée le premier poinçon (7) d'un segment (5) obtenu de manière intermittente, du côté intérieur profilé de la nappe (1), pour réaliser par zone une forme tridimensionnelle et on rapproche le second poinçon (8), du côté extérieur du profilé, du segment respectif (5) de la nappe au niveau du premier poinçon (7), de manière écartée et prédéterminée, la nappe (1), sollicitée entre les poinçons de pression (7, 8) est durcie par de la chaleur apportée en fonction de la matière, par exemple de la chaleur électrique, des infrarouges, du rayonnement ultraviolet, du plasma, de l'air chaud, de la lumière, avec des surfaces de pression (7', 8') des poinçons (7, 8) de forme correspondante.

2. Procédé selon la revendication 1,
**caractérisé en ce que**
on durcit d'abord la nappe (1) suivant une forme tridimensionnelle, avec un profil (2) allongé, notamment ouvert à une extrémité ou un profil (2) en forme de cuvette allant jusqu'à un profil à symétrie de rotation dans une zone locale (3) rapportée au profil, et dans chaque zone (3) l'installation (4) pour déplacer de manière intermittente, par segment, la nappe (1) à partir de la position d'alimentation peut être mise en prise.

3. Procédé selon la revendication 2,
**caractérisé en ce que**
pour le déplacement intermittent de la nappe (1) on utilise un dispositif de levage aspirant comme installation (4).

4. Dispositif pour la mise en oeuvre du procédé selon l'une quelconque des revendications 1 à 3,
**caractérisé en ce que**
les outils (6) pour déformer une forme tridimensionnelle (profil 2) comportent deux poinçons de pressions (7, 8) décalés diamétralement, axialement, avec un contour en cornière ou en gradin (9) qui sont disposés en biais par rapport à un segment de nappe (5) obtenu de manière intermittente, et qui est tout d'abord suspendu sous l'effet du poids, le premier poinçon de pression (7), actif, présente une surface inclinée (10) venant prendre sous le contour en gradin, pour donner une forme du côté intérieur du contour en cornière ou en gradin (9), et à laquelle fait suite une surface de pression (7'), réduite, sensiblement rectangulaire, en regard de la section du poinçon de pression (7), cette surface de pression (7') ayant sur le second poinçon de pression (8) une surface de pression (8') correspondante, en regard, dans la tête de poinçon (11) par ailleurs arrondie.

5. Dispositif selon la revendication 4,
**caractérisé en ce que**
chaque outil (6) est prévu à l'extrémité libre du bras d'un robot industriel commandé par un calculateur.

6. Dispositif selon les revendications 4 et 5,
**caractérisé en ce qu'**
une telle installation d'alimentation (12) est choisie pour une nappe (1) à une ou plusieurs couches, avec une poussée de matière sous précontrainte, correspondant à la déformation tridimensionnelle, pour le déplacement intermittent de la nappe (1).

7. Dispositif selon les revendications 4 à 6,
**caractérisé en ce que**
l'installation d'alimentation comporte plusieurs groupes de robots industriels qui coopèrent pour déformer des profilés différents (2) ou des zones de profilés différents (9) d'une nappe (1).
